# EUROPÄISCHE PATENTSCHRIFT

(11) **EP 0 811 529 B1**
(45) Veröffentlichungstag und Bekanntmachung des Hinweises auf die Patenterteilung: **08.12.2010**
(21) Anmeldenummer: 97109022.0
(22) Anmeldetag: 04.06.1997
(51) Int. Cl.: B60R 16/02, H02J 7/00

(54) **Schaltungsanordnung mit verringerter EMV-Abstrahlung**
Circuit with reduced EMI radiation
Dispositif de commutation avec faible tolérance de rayonnement électro-magnétique

(30) Priorität: 04.06.1996 DE 19622417
(43) Veröffentlichungstag der Anmeldung: 10.12.1997
(73) Patentinhaber: Infineon Technologies AG, 85579 Neubiberg (DE)
(72) Erfinder: Graf, Alfons, Dr., Ing., 86916 Kaufering (DE)
(74) Vertreter: Bickel, Michael

(56) Entgegenhaltungen:
- WO-A-96/33078
- DE-A- 3 908 338
- DE-A- 4 227 165
- US-A- 4 675 255
- Hancock, J.M.: *dPROFET II - a second Generation Family of Smart Power Switches*d; Konferenzartikel einer nicht näher bekannten Konferenz, veröffentlicht am 18.10.1990, Seiten 102-106; XP10010727A
- Biebl, A.: *Fault Detection at PROFET Transistor Status Output*d; Fachzeitschrift *Siemens Components*, Berlin und München (DE), September 1988, Seiten 163-165; XP000002202
- "PROFET-Description" PUBLICATION OF SIEMENS SEMICONDUCTOR GROUP, 4. März 1997 (1997-03-04), Seiten 1-1-2-7, XP002063574

## Beschreibung

Die vorliegende Erfindung betrifft eine an sich bekannte Schaltungsanordnung in einem Kraftfahrzeug mit einem Halbleiterschalter, dessen Laststrecke einerseits über eine erste Versorgungsschaltung mit der positiven Batterieklemme und andererseits über eine zweite Versorgungsleitung mit einer Last und einer Freilaufdiode verbunden ist, sowie mit Mitteln zur Pulsweitenmodulation, die den Halbleiterschalter steuern.

Eine derartige Schaltungsanordnung wird grundsätzlich zur Pulsweitenmodulation bei Motoren oder Ventilen verwendet. In Kraftfahrzeugen wird eine derartige Anordnung jedoch nur zögerlich eingesetzt und bei Schaltströmen im Bereich von 20 A kommen derartige Schaltungen im Kraftfahrzeugbereich aufgrund der hohen Gefahr der EMV-Abstrahlung nicht zum Einsatz.

In der WO 96/33078 ist eine Batterieklemme beschrieben, in die wenigstens ein Halbleiterschalter integriert ist, der eine Sicherungsfunktion für die über die Batterieklemme an die Batterie angeschlossenen Verbraucher erfüllt. Während des Normalbetriebes ist der Halbleiterschalter dauerhaft leitend angesteuert, um eine Versorgung der Verbraucher sicherzustellen, wobei der Halbleiterschalter bei Detektion eines Störfalles, beispielsweise Übertemperatur, gesperrt wird.

Aufgabe der vorliegenden Erfindung ist es eine Schaltungsanordnung anzugeben, die es erlaubt, eine derartige Pulsweitenmodulation auch mit Strömen im Bereich von 20 A und mehr einzusetzen.

Diese Aufgabe wird durch eine Schaltungsanordnung gemäß Anspruch 1 gelöst. Weiterbildungen sind Gegenstand der Unteransprüche.

Die Erfindung macht sich die Tatsache zu Nutze, daß im Zuleitungsbereich zwischen Freilaufdiode und Last nur ein Strom mit relativ geringer Welligkeit fließt. Da für die EMV-Abstrahlung der Strom wesentlich ist, wird daher erfindungsgemäß vorgeschlagen, den Halbleiterschalter und die Freilaufdiode möglichst nahe an die Batterie anzubringen.

In einer Weiterbildung sind Halbleiterschalter und Freilaufdiode Teil der Batterieklemme, womit die optimalste Verkürzung der Zuleitung zum Halbleiterschalter und der Freilaufdiode gewährleistet ist. Eine weitere Möglichkeit besteht darin, mehrere Halbleiterschalter und Freilaufdioden in einem Verteilerkasten unterzubringen, welcher möglichst nahe bei der Batterie oder an oder auf der Batterie befestigt ist.

Die Erfindung wird nachfolgend anhand von zwei Figuren näher erläutert. Es zeigen
- Figur 1: ein Prinzipschaltbild einer Pulsweitenmodulationsschaltungsanordnung und
- Figur 2: den zeitlichen Verlauf der in Figur 1 gekennzeichneten Ströme und Spannungen.

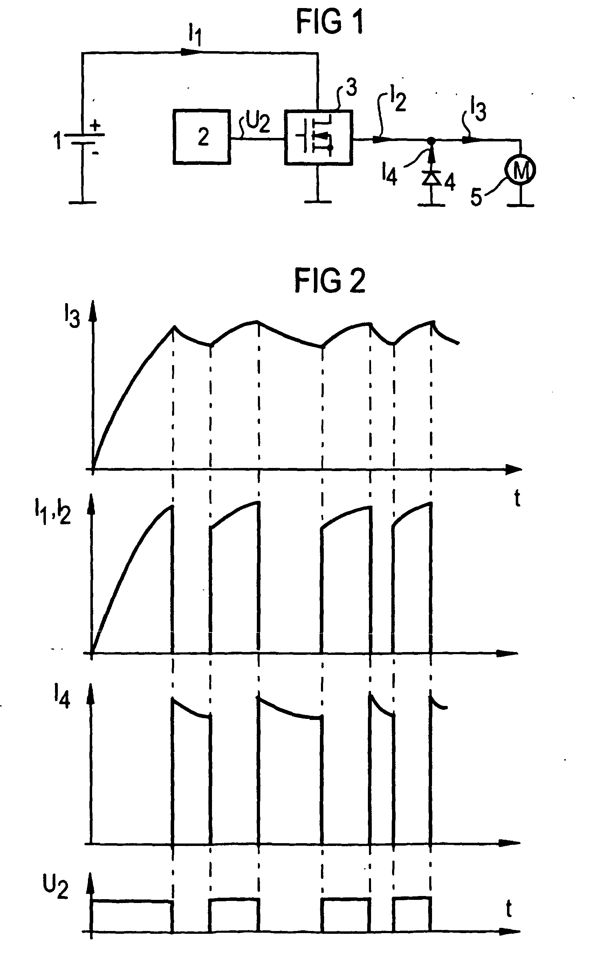

In Figur 1 ist mit 1 eine KFZ-Batterie mit positivem und negativem Pol dargestellt. Der positive Pol ist über eine erste Zuleitung mit der Laststrecke eines steuerbaren Halbleiterschalters 3 verbunden. Der steuerbare Halbleiterschalter 3 ist hier symbolisch als intelligenter Halbleiterschalter dargestellt, welcher z.B. einen Temperaturschutz, Überlastschutz usw. aufweisen kann. Der intelligente Halbleiterschalter 3 wird durch eine Pulsweitenmodulationssteuerungsschaltung 2 angesteuert. Der andere Anschluß der Laststrecke des intelligenten Halbleiterschalters 3 ist über eine zweite Zuleitung mit einer Last, hier z. B. ein Motor 5, verbunden. Parallel zum Motor 5 ist eine Freilaufdiode 4 angeordnet.

Eine derartige Anordnung sollte für eine geringe EMV-Abstrahlung einen Halbleiterschalter mit "weichen" Schaltflanken aufweisen, um wenig Oberwellen zu erzeugen.

Anhand von Figur 2 wird der zeitliche Verlauf von Strömen und Spannungen in der Figur 1 näher erläutert. Mit U₂ ist der Spannungsverlauf des Ansteuersignals der Pulsweitenmodulationssteuerung 2 dargestellt. Der Halbleiterschalter 3 wird durch dieses Signal digital ein- oder ausgeschaltet. Dadurch fließt in der Zuleitung zwischen Batterie 1 und Halbleiterschalter 3 der Strom I₁, welcher in Figur 2 im zweiten Diagramm von oben dargestellt ist. Der gleiche Strom fließt in der Leitung zwischen Halbleiterschalter 3 und Freilaufdiode 4. Man sieht daß hier extreme Stromsprünge entstehen und diese hauptverantwortlich für eine große EMV-Abstrahlung sind. Durch die Diode 4 fließt der Strom I_{4,} welcher als Freilaufstrom in den Austastlücken durch Freilaufdiode 4 und Motor 5 fließt. Mit I₃ ist der Strom bezeichnet, der auf der Leitung zwischen Freilaufdiode 4 und Motor 5 fließt. Man sieht, daß dieser Strom I₃ eine realtiv geringe Welligkeit aufweist, während die Ströme I₁, I₂ und I₄ extreme Stromsprünge machen.

Werden nun der Halbleiterschalter 3 und die Diode 4 im Motor integriert, so hat man zwar auf den langen Leitungen zwischen Batterie 1 und Halbleiterschalter 3 nahezu eine Gleichspannung, aber die Stromsprünge auf dieser Leitung sind extrem. Dadurch sind sehr große EMV-Störungen zu erwarten. Abhilfe kann hier nur durch speichernde Elemente wie Kondensatoren oder Drossel direkt am Schalter geleistet wird. Diese zusätzlichen Komponenten müssen bei großen Strömen jedoch ebenfalls groß dimensioniert werden und sind somit unerwünscht und teuer.

Erfindungsgemäß wird nun der Schalter 3 und die Freilaufdiode 4 sehr nahe an der Batterie 1 untergebracht. Dadurch werden die Zuleitungen mit den großen Stromsprüngen I₁, I₂ und I₄ kurzgehalten. Auf der nun langen Leitung zwischen Freilaufdiode 4 und Motor 5 fließt nun der Strom I₃ mit geringer Welligkeit, lediglich die Spannung auf dieser Leitung macht große Sprünge. Die EMV-Abstrahlung wird durch diese Maßnahme erheblich verringert. Somit können zusätzliche Filterelemente weitgehend entfallen.

Dieses Konzept hat zusätzlich den Vorteil, daß die Leitung zum Motor durch den Halbleiterschalter als Sicherungsersatz geschützt werden kann. Das bedeutet, eine Sicherung ist in diesem Fall nicht notwendig und die Leitung zum Motor kann in seinem Querschnitt optimiert werden.

Die erfindungsgemäße Anordnung bestehend aus Halbleiterschalter und Diode kann bevorzugt in eine Batterieanschlußklemme integriert werden. Auf diese Weise werden kürzeste Zuleitungen garantiert.

Sollte die Anzahl von zwei derartigen Halbleiterschaltern mit Diode zu groß werden, daß eine Integration in eine Batterieklemme nicht mehr praktikabel ist, so kann eine Vielzahl von erfindungsgemäßen Anordnungen auch in einem Verteilerkasten untergebracht werden, der direkt auf oder an der Batterie befestigt wird.

## Patentansprüche

1. Schaltungsanordnung in einem Kraftfahrzeug mit einem Halbleiterschalter (3) dessen Laststrecke einerseits über eine erste Versorgungsleitung mit der positiven Batterieklemme und andererseits über eine zweite Versorgungsleitung mit einer Last (5) und einer Freilaufdiode (4) verbunden ist, sowie mit Mitteln zur Pulsweitenmodulation (2), die den Halbleiterschalter (3) steuern, **dadurch gekennzeichnet, dass** der Halbleiterschalter (3) und die Freilaufdiode (4) möglichst nahe an der Batterieklemme angeordnet sind, so dass die erste Versorgungsleitung und die Leitung zwischen Halbleiterschalter (3) und Freilaufdiode (4) im Verhältnis zur restlichen Zuleitung zur Last (5) kurz wird.

2. Schaltungsanordnung nach Anspruch 1,
**dadurch gekennzeichnet, daß** der Halbleiterschalter (3) und die Freilaufdiode (4) in der Batterieklemme integriert sind.

3. Schaltungsanordnung nach Anspruch 1,
**dadurch gekennzeichnet, daß** der Halbleiterschalter (3) und die Freilaufdiode (4) in einem Verteilerkasten an oder auf der Batterie untergebracht sind.

## Claims

1. Circuit arrangement in a motor vehicle, having a semiconductor switch (3) whose load section is connected, on the one hand, to the positive battery terminal via a first supply line and, on the other hand, to a load (5) and a freewheeling diode (4) via a second supply line, as well as having means for pulse-width modulation (2) which control the semiconductor switch (3), **characterized in that** the semiconductor switch (3) and the freewheeling diode (4) are arranged as close as possible to the battery terminal so that the first supply line and the line between the semiconductor switch (3) and freewheeling diode (4) is shortened in relation to the remainder of the supply lead to the load (5).

2. Circuit arrangement according to Claim 1, **characterized in that** the semiconductor switch (3) ands the freewheeling diode (4) are integrated in the battery terminal.

3. Circuit arrangement according to Claim 1, **characterized in that** the semiconductor switch (3) and the freewheeling diode (4) are accommodated in a distributor box at or on the battery.

## Revendications

1. Circuit dans un véhicule automobile, comprenant un commutateur (3) à semiconducteur dont la section de charge est reliée, d'une part, à la borne positive de la batterie par une première ligne d'alimentation et, d'autre part, à une charge (5) et à une diode (4) de roue libre par une deuxième ligne d'alimentation, ainsi que des moyens de modulation (2) de largeur d'impulsion, qui commandent le commutateur (3) à semiconducteur, **caractérisé en ce que** le commutateur (3) à semiconducteur et la diode (4) de roue libre sont disposés aussi près que possible de la borne de la batterie, de manière à ce que la première ligne d'alimentation et la ligne entre le commutateur (3) à semiconducteur et la diode (4) de roue libre soient courtes par rapport à la ligne restante allant à la charge (5).

2. Circuit suivant la revendication 1,
**caractérisé en ce que** le commutateur (3) à semiconducteur et la diode (4) de roue libre sont intégrés à la borne de la batterie.

3. Circuit suivant la revendication 1,
**caractérisé en ce que** le commutateur (3) à semiconducteur et la diode (4) de roue libre sont logés dans un caisson formant répartiteur à la batterie ou sur la batterie.
